# EUROPEAN PATENT APPLICATION

(11) **EP 1 952 923 A1**
(43) Date of publication of application: **06.08.2008**
(21) Application number: 07425052.3
(22) Date of filing: 01.02.2007
(51) Int. Cl.: B23B 31/20

(54) **Collet chuck for machine tools**

(71) Applicant: MARIO PINTO S.p.A., 10135 Torino (IT)
(72) Inventor: Bronzino, Pier Domenico, 1004 Caprie (TO) (IT)
(74) Representative: Spandonari, Carlo

(57) **Abstract**

A hollow housing (11, 111) is connectable to a drive of a machine tool and houses a collet consisting of three coaxial angular sectors (30, 130) which are radially closable under control of driving means. The sectors each have a shaped inner profile (34) and a frustoconical outer profile (36) tapered in an operative direction (D). The said driving means comprise axially retaining means for the collet (24, 26), first radial inclines (22, 122) integral with the housing (11, 111), an axially slidable member (44, 46, 146) having second radial inclines (54, 154) facing the first inclines (22, 122) and radially aligned thereto, with a concordant but lesser slope with respect to the first inclines, rollers (68, 168) arranged between the first and second inclines, and a hollow actuator member (58, 158) which coaxially surrounds the collet with a frustoconical inner profile (58b) complementary to the outer profile of the sectors (30, 130), and in axial contact engagement with said rolling elements (68, 168). The first inclines and the second inclines converge towards said operative direction, and said slidable member is axially operable in the operative direction to cause the rolling elements (68, 168) to slip such as to axially push the actuator member (58, 158) against the collet in a direction opposite to the operative direction, with consequent closure of the collet by mutual engagement of the frustoconical surfaces of the sectors (30, 130) and of the actuator (58, 158) respectively.

## Description

The present invention relates to a collet chuck for machine tools.

As known, several traditional machine tools, such as the lathes, have a motorized chuck mounted thereon which is provided with a pneumatically driven, blank-holding collet for clamping either a blank to be machined or a tool, a center, or another similar device, depending on the type of machine tool and on the specific process to be carried out. The collet usually consists of three angular sectors which assembled define an frustoconical outer profile and an cylindrical inner seat in which the blank is received. The three sectors are surrounded by a stationary member which has a frustoconical inner profile complementary to the outer profile of the sectors. In order to clamp the blank, the collet is pulled by a pneumatic or hydraulic cylinder, or by another type of cylinder, thereby causing radial closure of the sectors by mutual engagement of the frustoconical outer surfaces of the sectors with the complementary inner surface of the stationary member.

A known drawback of the traditional collet chucks of the above mentioned type is that the axial pulling action applied on the collet causes the collet to axially move of a few hundredths of a millimeter. This circumstance affects the accuracy of positioning of the blank and consequently the overall accuracy of the process.

In order to overcome the above drawback, it has been proposed to axially lock the collet and to perform the clamping by axially pushing a movable member, which surrounds the collet and has a complementary frustoconical inner profile, against the collet. However, it will be apparent to the person skilled in the art that this solution is not desirable because, by operating the rod of the cylinder with a pushing action with respect to the chuck, the cylinder can probably be damaged and the chuck is forced to detach from the front of the machine tool.

Therefore, it is a main object of the present invention to provide a collet chuck which overcomes the above drawbacks of the prior art and particularly which provides a better accuracy of positioning of the blank in the chuck, by preventing the blank from moving while the collet is closed.

It is another object of the invention to provide a clamping system in which the operating cylinder acts with a pulling action with respect to the chuck.

The above object and other advantages which will become apparent from the following description are achieved by a collet chuck having the features recited in claim 1, while the dependent claims state other advantageous, though secondary features, of the invention.

The invention will be now described in more detail, with reference to a few preferred, non-exclusive embodiments shown by way of non-limiting example in the attached drawings, wherein:
Fig. 1 is a front view of a collet chuck according to the invention;
Fig. 2 is a view in cross section of Fig. 1 made along line II-II;
la Fig. 3 è una vista in sezione di Fig. 1 eseguita lungo l'asse III-III;
Fig. 4 is a view in cross section of Fig. 2 made along line IV-IV;
Fig. 5 is a view in cross section of Fig. 2 made along line V-V;
Figs. 6 and 7 diagrammatically show two successive steps of clamping a general blank to be machined within a collet chuck according to the invention;
Fig. 8 is a view in axial cross section which diagrammatically shows an alternative embodiment of the collet chuck according to the invention.

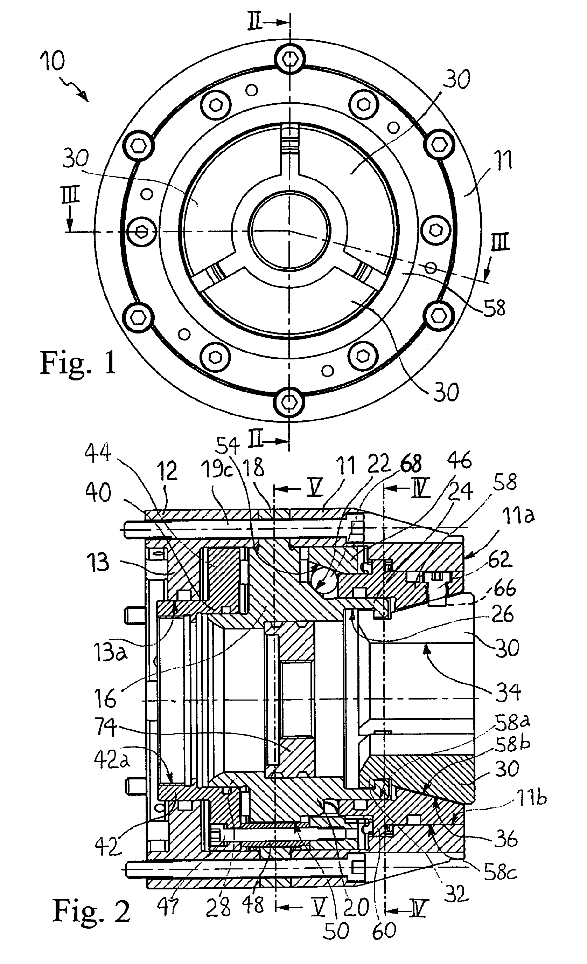

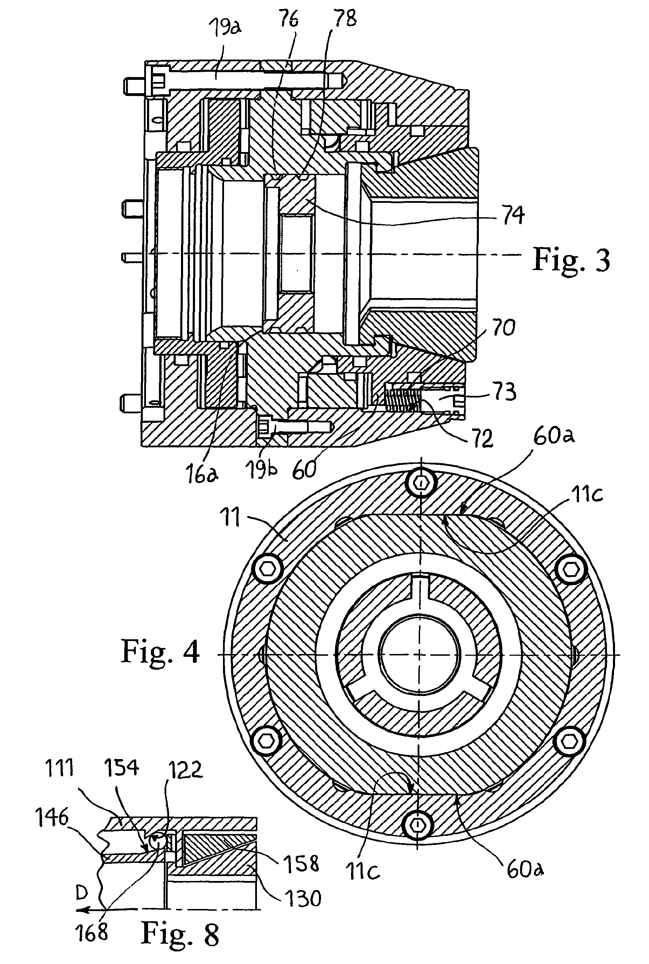

With reference to the above Figures, a collet chuck 10 of a general machine tool, such as a lathe (not shown), comprises a substantially cylindrical hollow housing 11 which has a tapered insertion end 11 a which is open to receive a blank to be machined, and is closed at its opposite end by a cylindrical cover 12 arranged coaxial to housing 11. Cover 12 has a transverse wall 13 having a cylindrical axial opening 13a. A sleeve 16 is housed within housing 11 and has an annular flange 18 clamped between housing 11 and cover 12 by longitudinal screws 19a and 19b (Fig. 3), with further longitudinal screws 19c (Fig. 2) which longitudinally pass through housing 11, flange 18 of sleeve 16 and cover 12, in order to be screwed to a drive (not shown) of the machine tool. A shaped axial portion 20 of sleeve 16, which is located on the side of flange 18 facing insertion end 11a, has a plurality of radial inclines 22 converging towards the insertion end. Beyond shaped axial portion 20, sleeve 16 terminates with a cylindrical portion 24 having an inner groove 26 near the end of sleeve 16. On the opposite side of flange 18, sleeve 16 has a cylindrical guide 28.

Sleeve 16 has three coaxial angular sectors such as 30 anchored thereto, each having a cylindrical inner profile and a frustoconical outer profile. The small end of each angular sector 30 is provided with an annular lip 32 engaging groove 26 for anchoring purposes. The three assembled angular sectors form a blank-holding collet having an inner cylindrical seat 34 defined therein for receiving the blank to be machined, as well as an outer frustoconical surface 36 for the purposes which will be clarified below. Of course, dependigng on the shape of the blank to be machined, the inner profile of the sectors could have a shape other than cylindrical for retaining the blank, e.g., a shape defining a square-profiled or hexagon-profiled seat, or another similar profile.

A slidable member is also housed within housing 11 and cover 12, which comprises a ring nut 40 which slidably surrounds cylindrical guide 28 of sleeve 16. Ring nut 40 has a cylindrical portion 42 which is slidably inserted in axial opening 13a of cover 12, as well as a flange 44 which is slidable between wall 13 of cover 12 and flange 18 of sleeve 16. Cylindrical portion 42 of ring nut 40 is internally threaded in 42a to be screwed to the rod of an actuator cylinder (not shown) for the purposes which will be clarified below. Ring nut 40 has a shaped ring 46 attached thereto which is located on the opposite side of flange 18 of the sleeve to coaxially surround shaped axial portion 20 of sleeve 16. Shaped ring 46 is coaxially attached to ring nut 40 by screws 47, with interposition of a plurality of spacing bushes 48, which are inserted in corresponding longitudinal passages 50 formed on flange 18 and are sandwitched between ring 46 and ring nut 40. Shaped ring 46 has an inner profile shaped with radial inclines 54 which are radially aligned to inclines 22 on sleeve 16 and also converge towards insertion end 11 a, but with a lesser slope with respect to inclines 22 on the sleeve.

A hollow actuator 58 has an inner cylindrical portion 58a which slidably surrounds cylindrical portion 24 of sleeve 16, and a frustoconical portion 58b which surrounds the three sectors 30 of blank-holding collet and has a profile complementary to the frustoconical profile of the sectors. An outer cylindrical surface 58c of hollow actuator 58 slidably engages a complementary inner cylindrical surface 11b of housing 11. Hollow actuator 58 has an annular projection 60 with two facets 60a (Fig. 4) at diametrally opposed positions, which slidably engage corresponding facets 11c made on the inner surface of housing 11 for rotational coupling purposes. A radial alignment screw 62 is screwed to the hollow actuator and engages a groove 66 formed on one of the sectors with one of its ends, thereby rotationally coupling the collet to hollow actuator 58. Between inclines 22 on sleeve 16 and inclines 54 on ring 46, respective rollers 68 are arranged which contact the upper edge of hollow actuator 58, which is normally biased away from the collet by springs 70 (Fig. 3) received in corresponding longitudinal holes 72 formed at the end of housing 11 and compressed between annular projection 60 and a threaded plug 73 screwed in a respective one of the longitudinal holes 72. Advantageously, the slope of inclines 22 on the sleeve with respect to the axis of the chuck is in the range 35° to 60°, preferably 45°, while the slope of inclines 54 on ring 46 is in the range 10° to 30°, preferably 20°.

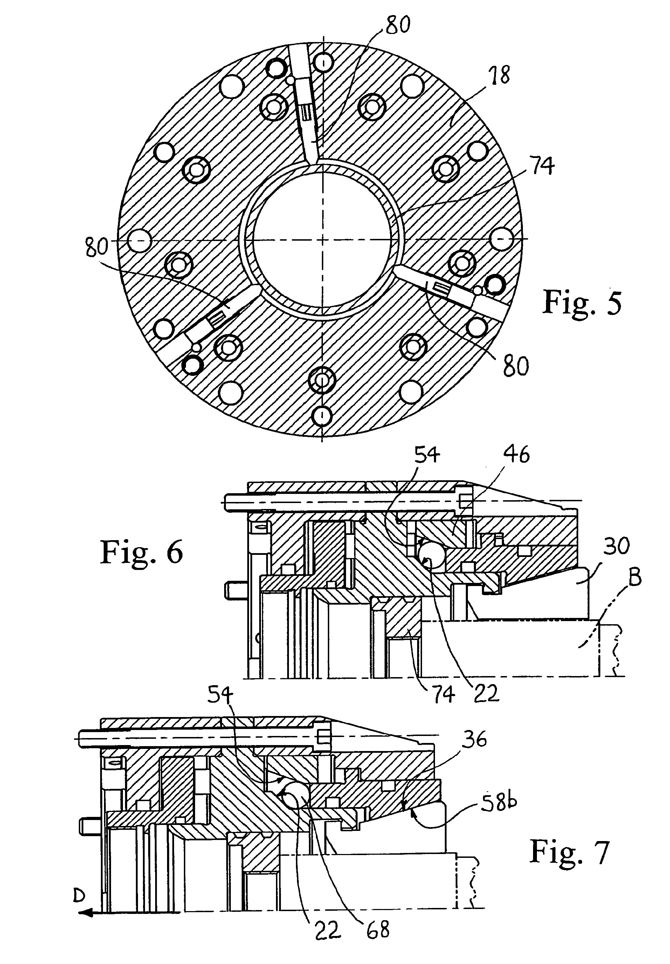

Having now particular reference to Figs. 3, 5, a disc 74 is arranged within sleeve 16, abuts against an inner abutment 16a of sleeve 16, and is provided with two circumferential grooves 76, 78 which are alteratively engageable by the ends of three radial pins 80 with conical heads, which are screwed to flange 18 of sleeve 16 at equally spaced angular positions.

In the operation, with particular reference to Fig. 6, a general blank B to be machined is inserted into cylindrical seat 34 of the collet and abuts against disc 74, as shown in Fig. 6. Thereafter, the actuator cylinder is operated to pull shaped ring 46, i.e., in the operative direction indicated by arrow D in Fig. 7. As shown in Fig. 7, the relative movement of inclines 54 on shaped ring 46 with respect to inclines 22 on stationary sleeve 16 causes the section to get narrower and the rollers 68 to axially push actuator 58 towards insertion end 11a, so that the actuator engages outer frustoconical surface 36 of sectors 30 with its inner frustoconical surface 58b, thereby causing the sectors to radially close around the blank, i.e., the collet to close.

With the chuck according to the invention, when the collet is closed no longitudinal movement of the sectors occurs, contrary to the conventional chucks in which the frustoconical collet is closed by pulling it against a couter-shaped stationary member. In fact, with the clamping system of the invention, when the slidable member is pulled, the direction of motion is reversed by rollers 68 which push actuator 58 in the opposite direction, while the blank-holding collet remains still. As the person skilled in the art will immediately appreciate, this circumstance enables to overcome the drawback of the conventional chucks in which the axial movement of the collet while clamping affects the accuracy of positioning of the blank and consequently the overall accuracy of the process.

Fig. 8 diagrammatically shows another embodiment, in which stationary inclines 122 integral with housing 111 externally surround movable inclines 154 integral with slidable member 146 connected to actuator cylinder (not shown). With this embodiment, the slope of the inclines is reverse with respect to the previous embodiment, but the outer stationary inclines still have a greater slope than the movable inner inclines and the inclines still converge towards the operative direction D, whereby, likewise the previous embodiment, by pulling slidable member 146, rollers 168 push actuator member 158 against sectors 130 of the collet, thereby causing the collet to close by mutual engagement between the complementary frustoconical surfaces of the collet and of the actuator.

A few preferred embodiments of the invention have been described herein, but of course many changes may be made by a person skilled in the art within the scope of the inventive concept. In particular, rolling elements other than rollers may be used, for instance, balls.

## Claims

1. A collet chuck, comprising a hollow housing (11, 111) connectable to a drive of a machine tool and housing a collet consisting of coaxial angular sectors (30, 130), which are radially closable under control of driving means and each have a shaped inner profile (34) and a frustoconical outer profile (36) tapered in an operative direction (D), **characterized in that** said driving means comprise
- axially retaining means for the collet (24, 26),
- first radial inclines (22, 122) integral with the housing (11, 111),
- an axially slidable member (44, 46, 146) having second radial inclines (54, 154) facing the first inclines (22, 122) and radially aligned thereto, and having a concordant but lesser slope with respect to the first inclines,
- rolling elements (68, 168) arranged between said first inclines and second inclines,
- a hollow actuator member (58, 158) which coaxially surrounds the collet with a frustoconical inner profile (58b) complementary to the outer profile of the sectors (30, 130), and in engagement of axial contact with said rolling elements (68, 168),
said first inclines and second inclines converging towards said operative direction, and said slidable member being axially operable in said operative direction to cause the rolling elements (68, 168) to slip in such a way as to axially push the actuator member (58, 158) against the collet in a direction opposite to said operative direction, with consequent closure of the collet by mutual engagement of the frustoconical surfaces of the sectors (30, 130) and of the actuator (58, 158) respectively.

2. The collet chuck of claim 1, **characterized in that** said second inclines (54) externally surround said first inclines (22).

3. The collet chuck of claim2, **characterized in that** said hollow housing (11) has a sleeve (16) attached thereto which has a shaped axial portion (20) on which said first inclines (22) are formed, and that said slidable member comprises a shaped ring (46) surrounding said shaped axial portion (20) and internally provided with said second inclines (54).

4. The collet chuck of claim 3, **characterized in that** said sleeve (16) has a flange (18) which is axially clamped between said housing (11) and a cover (12), and said slidable member comprises a ring nut (40) which is positioned on the opposite side of the flange with respect to said shaped ring (46) and is connected to said shaped ring (46) by screws (47), with interposition of a plurality of spacer bushes (48) inserted in corresponding longitudinal passages (50) made on the flange (18) and sandwitched between the ring (46) and the nut (40).

5. The collet chuck of claim 3 or 4, **characterized in that** said retaining means comprise annular lips (32) projecting radially from the small ends of the angular sectors (30) and engaging a groove (26) in the sleeve (16).

6. The collet chuck of any of claims 3 to 5, **characterized in that** said hollow actuator member (58) has an inner cylindrical portion (58a) which slidably surrounds a corresponding cylindrical portion (24) of the sleeve (16).

7. The collet chuck of any of claims 1 to 6, **characterized in that** said actuator member (58) has at least one facet (60a) which slidably engages a corresponding facet (11c) on the housing (11) for rotational coupling purposes.

8. The collet chuck of any of claims 1 to 7, **characterized in that** said hollow actuator member (58) has an outer cylindrical surface (58c) which slidably engages a complementary inner cylindrical surface (11b) of the housing (11).

9. The collet chuck of any of claims 1 to 8, **characterized in that** the slope of said first inclines (22) is in the range 35° to 60°.

10. The collet chuck of claim 9, **characterized in that** the slope of said first inclines (22) is 45°.

11. The collet chuck of any of claims 1 to 10, **characterized in that** the slope of said second inclines (54) is in the range 10° to 30°.

12. The collet chuck of claim 11, **characterized in that** the slope of said second inclines (54) is 20°.
